# EUROPÄISCHE PATENTANMELDUNG

(11) **EP 0 940 809 A2**
(43) Veröffentlichungstag der Anmeldung: **08.09.1999**
(21) Anmeldenummer: 99102567.7
(22) Anmeldetag: 11.02.1999
(51) Int. Cl.: G11B 17/04

(54) **Verfahren und Vorrichtung für das Laden von Datenträgern**

(30) Priorität: 05.03.1998 DE 19809326
(71) Anmelder: GRUNDIG Aktiengesellschaft, 90762 Fürth (DE)
(72) Erfinder: Östheimer, Willi, 90762 Fürth (DE)
(74) Vertreter: Pröll, Jürgen, Dipl.-Ing. (FH)

(57) **Zusammenfassung**

Die vorliegende Erfindung betrifft ein Verfahren und eine Vorrichtung für das Laden von Datenträgern in ein Wiedergabe- und/oder Aufzeichnungsgerät, insbesondere für scheibenförmige optische Datenträger.

Beim Laden von Datenträgern kommt es häufig vor, daß die zu ladenden Datenträger nicht exakt auf den Lademechanismus, beispielsweise eine motorisch bewegte Schublade oder Auflagefläche, des Wiedergabe- und/oder Aufzeichnungsgeräts aufgelegt werden. Dadurch kann es beim Ladevorgang zu Problemen kommen, die bis zur Zerstörung des Datenträgers führen können.

Bei der vorliegenden Erfindung werden diese Probleme durch eine Geschwindigkeitsveränderung der Bewegung des Lademechanismus während des Ladevorgangs vermieden. Ein nicht exakt positionierter Datenträger wird dadurch in eine auf dem Lademechanismus vorgesehene Position gebracht. Dies wird durch die Masseträgheit des zu ladenden Datenträgers erreicht, der durch die Geschwindigkeitsveränderung des Lademechanismus eine Relativbewegung zum Lademechanismus ausführt, da er nicht fest mit diesem verbunden ist.

## Beschreibung

Die vorliegende Erfindung betrifft ein Verfahren und eine Vorrichtung für das Laden von Datenträgern in ein Wedergabe- und/oder Aufzeichnungsgerät, insbesondere für scheibenförmige optische Datenträger.

Beim Laden von Datenträgern, insbesondere scheibenförmigen optischen Datenträgern wie CDs (Compact Disks) oder DVDs (Digital Versatile Disks), kommt es häufig vor, daß die zu ladenden Datenträger nicht exakt auf den Lademechanismus, beispielsweise eine motorisch bewegte Schublade oder Auflagefläche, des Wedergabe- und/oder Aufzeichnungsgeräts aufgelegt werden.

Dadurch kann es beim Ladevorgang zu Problemen kommen. Beim Transport des Datenträgers durch den Lademechanismus, bei dem der Datenträger in Richtung der Antriebsspindel bewegt wird und auf die Antriebsspindel aufgesetzt wird, kann der Datenträger nämlich zwischen dem Gehäuse des Wiedergabe- und/oder Aufzeichnungsgeräts und dem Lademechanismus eingeklemmt werden. Ebenso ist es möglich, daß, weil die die Daten tragende Oberfläche des zu ladenden Datenträgers während des Ladevorgangs gegen die Antriebsspindel gedrückt wird, wenn er nicht exakt auf dem Lademechanismus aufgelegt ist, es zu einer Beschädigung des Datenträgers kommt.

Es ist daher Aufgabe der vorliegenden Erfindung, ein Verfahren und eine Vorrichtung für das Laden von Datenträgern in ein Wiedergabe- und/oder Aufzeichnungsgerät, insbesondere für scheibenförmige optische Datenträger, anzugeben, wobei die bekannten Probleme durch nicht exakt auf den Lademechanismus aufgelegte Datenträger vermieden werden sollen.

Bei dem erfindungsgemäßen Verfahren wird diese Aufgabe für ein Wiedergabe-und/oder Aufzeichnungsgerät für Datenträger, insbesondere für scheibenförmige optische Datenträger, dadurch gelöst, daß während des Ladens des auf einem Lademechanismus angeordneten
Datenträgers, bei dem der Lademechanismus eine vorgegebene Geschwindigkeit aufweist, eine Geschwindigkeitsveränderung des Lademechanismus vorgenommen wird.

Bei der erfindungsgemäßen Vorrichtung wird diese Aufgabe beim Laden von Datenträgern in ein Wiedergabe- und/oder Aufzeichnungsgerät, insbesondere für scheibenförmige optische Datenträger, mit einem Lademechanismus und einem den Lademechanismus betätigenden Antrieb, dadurch gelöst,
daß während des Ladens des auf dem Lademechanismus angeordneten Datenträgers, bei dem der Antrieb den Lademechanismus mit einer vorgegebenen Geschwindigkeit betätigt, der Antrieb eine Geschwindigkeitsveränderung des Lademechanismus bewirkt.

Die Erfindung geht dabei von der Überlegung aus, daß durch eine Geschwindigkeitsveränderung der Bewegung des Lademechanismus während des Ladevorgangs ein nicht exakt positionierter Datenträger in eine auf dem Lademechanismus vorgesehene Position gebracht wird. Dies wird durch die Masseträgheit des zu ladenden Datenträgers erreicht, der durch die Geschwindigkeitsveränderung des Lademechanismus eine Relativbewegung zum Lademechanismus ausführt, da er nicht fest mit diesem verbunden ist.

Die Vorteile der Erfindung liegen darin, daß der Ladevorgang von Datenträgern ohne Störung erfolgt, und daß insbesondere die Beschädigung von Datenträgern vermieden werden kann.

Weitere Vorteile der vorliegenden Erfindung ergeben sich aus den abhängigen Ansprüchen des erfindungsgemäßen Verfahrens und der erfindungsgemäßen Vorrichtung sowie der nachfolgenden Beschreibung des erfindungsgemäßen Verfahrens anhand eines Ausführungsbeispiels einer erfindungsgemäßen Vorrichtung mittels Figuren.

Es zeigt:
- Fig. 1: eine Draufsicht auf einen Lademechanismus für kreisförmige optische Datenträger, der aus einem Wiedergabe- und/oder Aufzeichnungsgerät ausgefahren ist, und
- Fig. 2: einen Schnitt durch den in Fig. 1 dargestellten Lademechanismus.

Gleiche in den Figuren dargestellte Elemente sind mit gleichen Bezugszeichen gekennzeichnet.

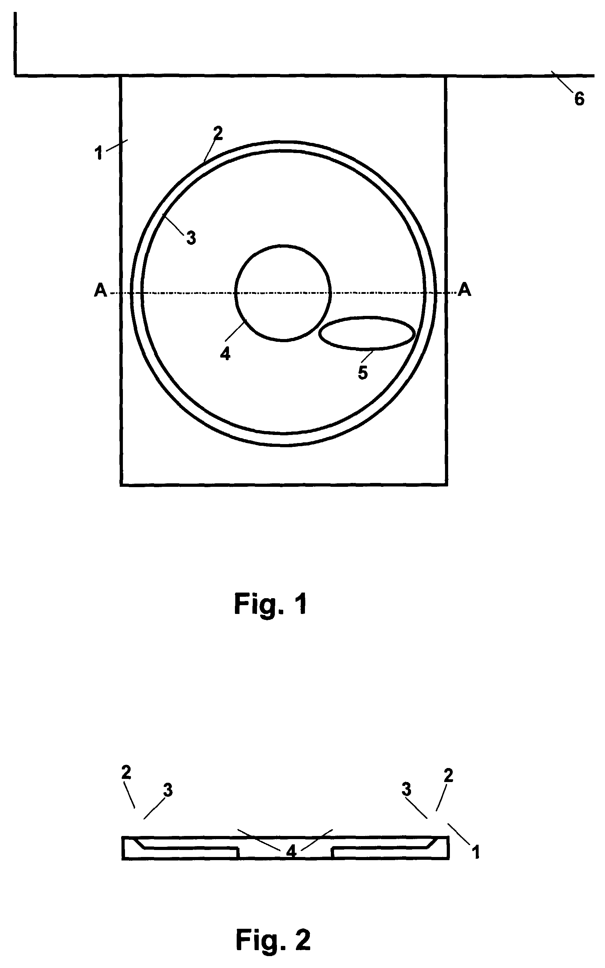

Figur 1 stellt einen Lademechanismus 1 für kreisförmige optische Datenträger eines Wiedergabe- und/oder Aufzeichnungsgeräts 6 dar, aus dem er zur Aufnahme eines Datenträgers ausgefahren ist. Zum Ein- und Ausfahren ist ein nicht dargestellter Antrieb vorhanden.

Der Lademechanismus 1 weist eine Vertiefung 2, 3 zur Aufnahme des Datenträgers auf. Außerdem sind zwei Öffnungen 4 und 5 in dem Lademechanismus 1 vorgesehen.

Die erste Öffnung 4 wird für eine nicht dargestellte Antriebsspindel des Wiedergabe- und/oder Aufzeichnungsgeräts 6 benötigt, für den Antrieb des Datenträgers zur Wiedergabe und/oder Aufzeichnung. Die zweite Öffnung 5 wird für eine nicht dargestellte optische Einheit des Wiedergabe- und/oder Aufzeichnungsgeräts 6 benötigt, für das Abtasten des Datenträgers bei Wiedergabe und/oder Aufzeichnung.

Zur Verdeutlichung der für die Aufnahme des Datenträgers vorgesehen Vertiefung 2, 3 im Lademechanismus 1 ist in Figur 2 der durch die Linie AA in Figur 1 gekennzeichnete Schnitt durch den Lademechanismus 1 dargestellt.

Die verwendeten Datenträger weisen einen Durchmesser auf, der etwa dem Durchmesser der unteren Begrenzung 3 der Vertiefung 2, 3 entspricht. Die obere Begrenzung 2 der Vertiefung wird in vorteilhafter Weise größer gewählt. Dadurch wird erreicht, daß der Datenträger exakt positioniert wird, insbesondere im Hinblick auf die Öffnungen 4 und 5.

Wird, wie eingangs beschrieben, der Datenträger allerdings nicht exakt in die Vertiefung 2, 3 eingelegt, d. h. der Datenträger überlappt die obere Begrenzung 2, kommt es zu den bekannten Problemen.

Um unter diesen Umständen einen fehlerhaften Ladevorgang zu vermeiden, wird während des Ladevorgangs eine Geschwindigkeitsveränderung der Bewegung des Lademechanismus 1 durch den Antrieb bewirkt. Nachdem der Ladevorgang eingeleitet wurde und der Lademechanismus 1 sich mit einer vorgegebenen Geschwindigkeit in das Wiedergabe- und/oder Aufzeichnungsgerät 6 bewegt, wird die vorgegebene Geschwindigkeit verändert. Die Geschwindigkeitsveränderung sollte bewirkt werden bevor die obere Begrenzung 2 den Rand des Wiedergabeund/oder Aufzeichnungsgeräts 6 erreicht, um ein Verklemmen bei Fehlauflage sicher vermeiden zu können.

Ein nicht exakt positionierter Datenträger wird durch die Geschwindigkeitsveränderung in die vorgesehene Vertiefung 2, 3 gebracht. Dies wird durch die Masseträgheit des zu ladenden Datenträgers erreicht, der durch die Geschwindigkeitsveränderung des Lademechanismus 1 eine Relativbewegung zum Lademechanismus 1 ausführt, da er nicht fest mit diesem verbunden ist und Datenträger und Lademechanismus 1 eine geringe Reibung zueinander haben.

Die größte Wirkung wird dabei erzielt, wenn die Geschwindigkeitsveränderung abrupt vorgenommen wird. Die Geschwindigkeitsveränderung wird für eine vorgegebene Zeitspanne vorgenommen, die so gewählt werden sollte, daß die Positionierung des Datenträgers abgeschlossen ist, bevor der Lademechanismus 1 bzw. die Vertiefung 2, 3 eine kritische Position erreicht, z. B., wie oben beschrieben, die Kante des Wiedergabe- und/oder Aufzeichnungsgeräts 6. Anschließend wird erneut die vorgegebene Geschwindigkeit zum Abschluß des Ladevorgangs verwendet. Es kann auch sinnvoll sein, den Ladevorgang mit einer geringeren als der anfangs vorgegebenen Geschwindigkeit zu beenden.

Die Geschwindigkeitsveränderung kann eine Verzögerung oder Beschleunigung der vorgegebenen Geschwindigkeit des Lademechanismus 1 sein. Ebenso kann vorgesehen werden, nacheinander sowohl eine Verzögerung als auch eine Beschleunigung durchzuführen oder umgekehrt.

Falls eine Verzögerung vorgenommen wird, kann die Geschwindigkeitsveränderung bis zu einer Umkehr der Bewegungsrichtung des Lademechanismus 1 führen, wobei nach einer vorgegebenen Zeitspanne die ursprüngliche Bewegungsrichtung wiederhergestellt wird.

Durch geeignete Gestaltung der Vertiefung 2, 3 kann die Wirkung der vorliegenden Erfindung verbessert werden. Beispielsweise kann der Durchmesser der oberen Begrenzung 2 größer gewählt werden als in den Figuren dargestellt.

Falls Datenträger mit unterschiedlichem Durchmesser verwendet werden sollen, z. B. sogenannte Single-CDs, können weitere, konzentrisch um die Öffnung 4 angeordnete Vertiefungen vorgesehen werden.

Es ist auch denkbar, daß ein Sensor vorgesehen ist, der überprüft, ob der Datenträger exakt aufgelegt wurde. In diesem Fall muß die beschriebene Positionierung durch Geschwindigkeitsveränderung nur dann vorgenommen werden, wenn durch den Sensor ein nicht exakt aufgelegter Datenträger festgestellt wurde. Die Erfindung läßt sich allerdings mit geringerem Aufwand realisieren, wenn auf den Sensor verzichtet wird und die beschriebene Geschwindigkeitsveränderung bei jedem Ladevorgang vorgenommen wird.

## Patentansprüche

1. Verfahren für das Laden von Datenträgern in ein Wiedergabe- und/oder Aufzeichnungsgerät, insbesondere für scheibenförmige optische Datenträger,
**dadurch gekennzeichnet,**
daß während des Ladens des auf einem Lademechanismus angeordneten Datenträgers, bei dem der Lademechanismus eine vorgegebene Geschwindigkeit aufweist, eine Geschwindigkeitsveränderung des Lademechanismus vorgenommen wird.

2. Verfahren nach Anspruch 1,
**dadurch gekennzeichnet,**
daß die Geschwindigkeitsveränderung abrupt vorgenommen wird.

3. Verfahren nach Anspruch 1 oder 2,
**dadurch gekennzeichnet,**
daß die Geschwindigkeitsveränderung für eine vorgegebene Zeitspanne vorgenommen wird und anschließend wieder die vorgegebene Geschwindigkeit eingestellt wird.

4. Verfahren nach einem der Ansprüche 1 bis 3,
**dadurch gekennzeichnet,**
daß die Geschwindigkeitsveränderung eine Verzögerung und/oder Beschleunigung der Geschwindigkeit des Lademechanismus ist.

5. Verfahren nach einem der Ansprüche 1 bis 3,
**dadurch gekennzeichnet,**
daß die Geschwindigkeitsveränderung eine Umkehr der Bewegungsrichtung des Lademechanismus bewirkt, wobei nach einer vorgegebenen Zeitspanne die ursprüngliche Bewegungsrichtung wiederhergestellt wird.

6. Vorrichtung für das Laden von Datenträgern in ein Wiedergabe- und/oder Aufzeichnungsgerät (6), insbesondere für scheibenförmige optische Datenträger, mit einem Lademechanismus (1) und einem den Lademechanismus (1) betätigenden Antrieb,
**dadurch gekennzeichnet,**
daß während des Ladens des auf dem Lademechanismus (1) angeordneten Datenträgers, bei dem der Antrieb den Lademechanismus (1) mit einer vorgegebenen Geschwindigkeit betätigt, der Antrieb eine Geschwindigkeitsveränderung des Lademechanismus (1) bewirkt.

7. Vorrichtung nach Anspruch 6,
**dadurch gekennzeichnet,**
daß der Antrieb die Geschwindigkeitsveränderung abrupt vornimmt.

8. Vorrichtung nach Anspruch 6 oder 7,
**dadurch gekennzeichnet,**
daß der Antrieb die Geschwindigkeitsveränderung für eine vorgegebene Zeitspanne vornimmt und anschließend wieder die vorgegebene Geschwindigkeit annimmt.

9. Vorrichtung nach einem der Ansprüche 6 bis 8,
**dadurch gekennzeichnet,**
daß der Antrieb die Geschwindigkeitsveränderung als eine Verzögerung und/oder Beschleunigung der Geschwindigkeit des Lademechanismus (1) bewirkt.

10. Vorrichtung nach einem der Ansprüche 6 bis 8,
**dadurch gekennzeichnet,**
daß der Antrieb die Geschwindigkeitsveränderung als eine Umkehr der Bewegungsrichtung des Lademechanismus (1) bewirkt, wobei der Antrieb nach einer vorgegebenen Zeitspanne die ursprüngliche Bewegungsrichtung wiederherstellt, daß der Lademechanismus (1) Konturen (2, 3) aufweist, die eine stabile Positionierung des Datenträgers durch die Geschwindigkeitsveränderung ermöglichen, daß ein Sensor überprüft ob sich der Datenträger in einer vorgegebenen Position (2, 3) auf dem Lademechanismus (1) befindet, und daß die Geschwindigkeitsveränderung durch den Antrieb nur bewirkt wird, wenn der Sensor eine Abweichung des Datenträgers von der vorgegebenen Position (2, 3) ermittelt.
